# EUROPEAN PATENT SPECIFICATION

(11) **EP 3 304 737 B1**
(45) Date of publication and mention of the grant of the patent: **02.09.2020**
(21) Application number: 16727355.6
(22) Date of filing: 26.05.2016
(51) Int. Cl.: H03K 3/84, H04L 9/08, G09C 1/00

(54) **METHOD FOR GENERATING A VALUE INHERENT TO AN ELECTRONIC CIRCUIT, ELECTRONIC CIRCUIT GENERATING THIS VALUE AND METHOD FOR USING SUCH A VALUE**
METHODE ZUM ERZEUGEN EINES INHÄRENTEN WERTES FÜR EINEN ELEKTRONISCHEN SCHALTKREIS, ELEKTRONISCHER SCHALTKREIS, DER DIESEN WERT ERZEUGT, UND VERWENDUNGSMETHODE DIESES WERTES
PROCÉDÉ DE GÉNÉRATION D'UNE VALEUR INHÉRENTE À UN CIRCUIT ÉLECTRONIQUE, CIRCUIT ÉLECTRONIQUE GÉNÉRANT CETTE VALEUR ET PROCÉDÉ D'UTILISATION D'UNE TELLE VALEUR

(30) Priority: 27.05.2015 EP 15169422
(43) Date of publication of application: 11.04.2018
(73) Proprietor: Nagravision S.A., 1033 Cheseaux-sur-Lausanne (CH)
(72) Inventor: MACCHETTI, Marco, 22070 Casnate con Bernate (IT); HAUTIER, Roan, 1148 Cuarnens (CH); FAVI, Claudio, 1867 Ollon (CH); PERRINE, Jérôme, 1122 Romanel sur Morges (CH)
(74) Representative: Hoyng Rokh Monegier LLP
(86) International application number: PCT/EP2016/061867
(87) International publication number: WO 2016/189070

(56) References cited:
- EP-A1- 2 081 170
- US-A1- 2015 046 718
- EDWARD SUH G ET AL: "Physical Unclonable Functions for Device Authentication and Secret Key Generation", 2007 44TH ACM/IEEE DESIGN AUTOMATION CONFERENCE : SAN DIEGO, CA, 4 - 8 JUNE 2007, IEEE, PISCATAWAY, NJ, 1 June 2007 (2007-06-01), pages 9-14, XP031183294, ISBN: 978-1-59593-627-1

## Description

### TECHNICAL DOMAIN

The present description relates to a method allowing to generate a value inherent to an electronic circuit, such as for example a chip or a chipset. More particularly, this method involves the use of physically unclonable functions, namely the use of functions that cannot be reproduced, copied or cloned. The present description also relates to an electronic circuit, for the implementation of the method, as well as a method using a value inherent to such a circuit.

### PRIOR ART

Physically unclonable functions (PUF for short) are currently being studied in the academic world and industrial world as unique identifier sources, physically connected to electronic components incorporated or associated to integrated circuits. The main idea aims at exploiting manufacturing process variations of these components which make the electronic circuits (such as chips or chipsets) unique thanks to their intrinsic properties.

This technology is based on the particularities that all manufacturing processes of electronic components usually have. As such processes cannot be perfect but they ensure a production with a certain accuracy margin, within this margin they create minor differences between the components they produce. In other words, although these components come from the same production line and are produced in the same conditions, there are however differences that, in an intrinsic way, customize involuntarily these components. The trick is to transform these differences, resulting from the tolerances of the manufacturing process, into exploitable information. This information can be qualified as almost unique, given the fact that the probability to obtain, at the end of a production line, two integrated circuits provided with components having exactly the same physical characteristics is extremely low. Moreover, this information has the particularity of being non predictable and non reproducible by the manufacturing process. It thus becomes possible to identify a component or a set of electronic components among others.

A physical unclonable function, hereinafter called PUF function, is a function that takes advantage of the random variations peculiar to the components of an integrated circuit by determining via exact measures one or more physical parameters of these electronic components. It is thus easy to create such a PUF function to obtain an identifier or a particular value, hereinafter called PUF value, but it is very difficult, if not impossible, to clone this function to retrieve this value. This arises mainly because the PUF value from such a function is, from a practical point of view, impossible to predict and/or to reproduce, since the tiny differences that customize the electronic components on which the PUF function is based cannot be controlled. The information from these small differences can be represented by a pseudo-random bit sequence. This information or unique value has thus all the expected characteristics of a secret that could advantageously be used for cryptographic purposes, for example.

Most applications considered so far can be grouped into three main categories, i. e. generation of identifiable chips by means of a unique identifier defined by such a PUF function, chip authentication via a process involving challenges and associated responses (of challenge/response type), as well as the generation of cryptographic keys. Currently, it is noted that most applications refer to the last category and aim at covering solutions where the PUF value is used as a cryptographic key in secured message exchanges.

The disadvantage of these chips lies on the fact that the PUF value they create can vary. Indeed, since this value depends on electronic components, it could only be defined as immutable in ideal theoretical conditions corresponding to an absence of parasitic noise. Now, in reality, this PUF value can fluctuate slightly depending on the conditions of use. These fluctuations can typically refer to operating temperature variations of electronic components or to slight variations in the power supply. They can also result from a random noise produced by the circuit itself (for example in case of an old circuit) or by the environment in which it is located. These instabilities involve erroneous responses, i. e. responses that, in certain conditions of use, no longer correspond to those obtained in a controlled environment, such as that of a production line.

In order to be able to get a PUF value that is constant from such a chip, there are several known solutions.

The first solution is to generate a value by means of a PUF function and to store this PUF value in a memory of the chip. Thus, each time that this PUF value will have to be used, for example as a cryptographic key or identifier, it will be retrievable from this memory. Now, storing a value that can be confidential in a memory does not preclude this to be read by a malicious person.

A second solution is to check the accuracy of the value coming from the PUF function, or at least to detect if this value is vitiated by an error. For this purpose, the PUF value can be compared to a reference value. This reference value can be the value most often produced by the PUF function. Now this comparison involves the storage in the memory of the reference value that, as seen, is not a solution that can be considered as sufficiently secured. For detecting whether the value produced by the PUF function is a plausible value, another solution is to use a complementary indication that characterizes the PUF value. This indication is generally used in certain data transmission via communication channels that are not entirely reliable. Such an indication can typically consist of a parity bit, put to zero if the sum of bits from the PUF value is even, and put to one if it is odd. The first disadvantage of such an indication is that it does not allow to guarantee the accuracy of the PUF value, and it only offers an indication of the probability that this value be correct. The second disadvantage is that such an indication results from a calculation based on the value of the PUF function and thus provides information on this value. Now, any piece of information on this value could be helpful to any malicious person trying to identify the value of the PUF function. To avoid this first disadvantage, the use of error correction codes is known, such as Hamming codes that can both detect the presence of an error and correct it. However, such codes also provide information on the PUF value and have the same disadvantage as the above-mentioned second disadvantage. Additionally, these correction codes are not able to correct all kinds of errors. For example, some of these codes can only correct errors due to simple bit inversions.

A third solution consists in generating this PUF value several times in a row, in successive rounds, each time we need to obtain this value, then to compare the PUF values generated this way before finally returning the most often shown value. This process requires however that error probabilities be weak so that the real PUF value may be clearly identified among all calculated values during each round. Moreover, carrying out a non-negligible number of rounds needs an important execution time that monopolizes the calculation resources of the chip and prevents the latter from accessing other processes aiming in particular at using the PUF value for a particular application.

A fourth solution is described in publication EP2816757 and consists in setting a PUF function by a setpoint datum that, during an initial setup operation, allows to further customize the electronic circuit hosting the PUF function. This customization is obtained for example by selecting the components that will form the basis of this function. In other words, this setpoint datum allows to choose, among the electronic components of the chip useful for the PUF function, a subset of electronic components on which measures of one or several physical quantities will be carried out. This initialization operation can typically occur during chip production or subsequently during a test or initialization phase of the chip. The disadvantage of this solution lies on the fact that, during this initialization, test or personalization phase, the chip is in an "open state" giving access to its physical characteristics, so to the PUF value it is supposed to generate, or at least to precious information allowing to identify this value. Thus, any "open state" of the chip, even in a restricted environment, then represents a confidentiality issue.

EP 2081170 describes a security device that provides enhanced stability and confidentiality of a key coming from a hash function. This device includes a PUF unit that offers resistance to attacks by using physical characteristics to generate a predefined key coming from such a hash function. It also includes a unit to store partial error correction information, a correction unit of the PUF function producing a piece of PUF correction information, as well as several other correction units.

The document XP031183294 (Edward Suh G et al., entitled "Physical Unclonable Functions for Device Authentication and Secret Key Generation") describes designs based on PUF functions that exploit delay characteristics inherent to transistors that differ from integrated circuit to integrated circuit. This document describes how PUF functions can allow low cost authentication of integrated circuits and generate volatile secret keys for cryptographic operations.

### BRIEF DESCRIPTION

The object of the present description is to at least partially solve the above-mentioned problems by proposing an electronic circuit which is able by means of a physical unclonable function, to generate a constant value without external intervention. A method allowing to generate such a value in such a circuit is also proposed as another object, as well as a particular method of use of this value. The invention is defined as set out in independent claims 1 and 9.

The aforementioned electronic circuit refers to any circuit or circuit part. In particular, it can be that of a chip, a chipset or a portion of a chip.

The above-mentioned adjective "constant" means that this value can be reproduced without divergence and in a durable manner by the electronic circuit. This adjective thus describes the stability and the reliability of the produced value.

The use of the PUF function aims at specifying that this value is intimately connected to the electronic circuit, especially materially or physically connected to components of this circuit. The name "PUF value" derives from this connection. As previously mentioned, since this value depends on the unique components of the electronic circuit it comes from, it could advantageously be an almost unique character that would qualify its existence in only one copy. Indeed, the chances which are already extremely little to obtain two integrated circuits provided with components having exactly the same physical characteristics can be reduced to negligible proportions by designing the electronic circuit provided with a PUF function in an intelligent way. The uniqueness of the PUF value compared to the same electronic circuit batch, will not only depend on the number of electronic circuits considered but also on different parameters such as the number of components used to calculate the PUF value as well as the number of bits composing the PUF value.

In its general form, the method is intended to generate a PUF value, i. e. a value inherent to an electronic circuit via measures of a physical quantity, these measures being carried out on components of this circuit. This method includes the following steps:
- calculating and associating to each component at least one value derived from a series of measures carried out on said component,
- forming a collection of invariable pairs of components,
- selecting pairs from said collection so that the values associated to the components of each of these pairs be spaced from each other, i.e. separated or set aside from each other, by at least a setpoint value that is, in particular, invariable and preferably predefined,
- generating said value inherent to the electronic circuit by concatenating the results of comparisons of the values associated to the components of each selected pair and/or the results of comparisons of data, at least one of these data being derived from these values; in order to do this, said results are treated in an invariable, preferably predefined, order, just like said values or data regarding these pairs during said comparisons.

According to the invention, the calculation of the value derived from the series of measures is a statistical calculation. Still preferably, this calculation aims at determining an average value from said series of measures. The value derived from the series of measures can be the average value determined. Alternatively, an uncertainty range could also be calculated for each average value before defining the value derived from the series of measures as being the uncertainty range calculated.

According to the invention, the calculation of the value derived from the series of measures will include the following steps:
- determining a statistical value from said series of measures,
- defining said value derived from the series of measures as being said statistical value or an uncertainty range calculated from this statistical value;
said statistical value preferably being an average value, such as the average value of the measures of the series.

The criterion of selection of pairs among those from the collection can, for example, be the overlap absence of the uncertainty range associated to the components of the pairs of this collection. The application of this criterion is made on the uncertainty ranges associated to each pair examined during this selection.

The PUF value inherent to the electronic circuit can be for example generated by comparing the uncertainty ranges associated to the components of each pair previously selected. Thus, preferably, from each selected pair a bit can be obtained, having value 1 or 0, as a result of the comparison. As these comparisons are carried out on values which have been selected in order to be sufficiently separated from each other, and as the compared values or data are taken in an invariable order, then the results of these comparisons are advantageously constant, regardless of how many times they are repeated.

Furthermore, as the results of these comparisons are also treated in an invariable order, the resulting PUF value is a constant value, namely stable over time, regardless of any disturbance. Indeed, this value is advantageously not dependent on untimely variations due, for example, to temperature fluctuations or supply voltage and is not influenced by instabilities caused by parasite noises. As a consequence the process to generate this PUF value can advantageously be repeated from a session to another, in particular each time that the electronic circuit needs this value to be used in any application. This feature allows to avoid that this value be stored in a memory (for example a non-volatile memory), for further use of this application. Moreover, the reproducibility of this value does not depend on any external intervention to the electronic circuit that produced it either.

At any time, this circuit can be advantageously maintained in a "close state". No information allowing to provide an indication capable of discovering the PUF value is issued from this electronic circuit or, preferably, stored in it permanently. Accordingly, this circuit is able to generate, by its own means, a secret value specific to it and that cannot be discovered.

Other advantages and embodiments will be also presented in the following detailed description.

### BRIEF DESCRIPTION OF THE FIGURES

The description will be better understood thanks to the annexed schematic drawings, given as non-limiting examples, in which:
Figure 1 is a schematic representation of an electronic circuit, typically an integrated circuit, which operates a physical unclonable function (PUF).
Figure 2 is an illustration of an example of statistical data coming from the measures carried out on the components of the electronic circuit.
Figure 3 is an illustration of the main steps of the method according to a first embodiment.

### DETAILED DESCRIPTION

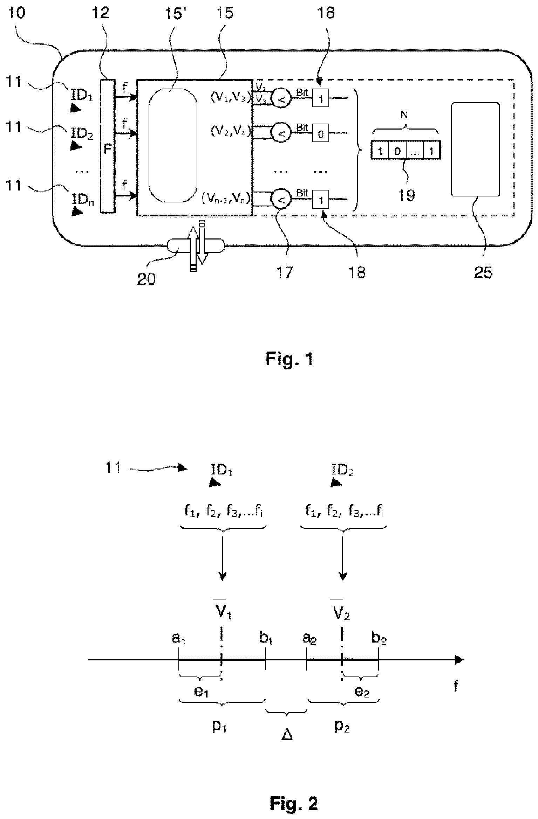

With reference to figure 1, it represents an electronic circuit 10, which can be typically an integrated circuit, a set of chips, an electronic chip, a part of a chip or any other element integrating an electronic circuit or a circuit portion. This circuit 10 includes several electronic elements, including a plurality of components 11 used as source elements to provide useful measures to create a physical unclonable function, the so-called PUF function. As schematically represented in this figure, these components 11 consist, for example, of distinct oscillators, in particular ring oscillators, the number of which being typically around several dozens, for example around 64 or 128 pieces. These oscillators 11 are preferably each coupled to a measuring element 12 for determining a physical value specific to each oscillator. In this case, the measuring element(s) 12 can precisely measure the frequencies f of the oscillators to which they are dedicated. Alternatively, one or a restricted number of measuring elements 12 could be shared by several oscillators to determine said physical value specific to each oscillator. Although in the following we will essentially refer to oscillators as examples of components 11, it is clear that this embodiment is in no way limiting and that other components 11 could be used, from which other physical quantities could be measured (by the measuring element(s) 12), such as current, voltage, power, resistance, temperature, time, light intensity, etc. Measurement element(s) 12 will be typically electronic devices equipped consequently to measure one or more physical quantities.

As a first approach, it can be considered that the oscillators which make up the electronic circuit 10 are identical and do not differ from one circuit 10 to another, in particular if they come from the same production line. However, as a second approach it can be seen that each oscillator has a frequency specific to it and that the frequencies of the oscillators are not exactly identical, but they fluctuate slightly from one oscillator to another. In deep submicron technologies, the small frequency variation, within oscillators of the same type produced for example by means of the same manufacturing process on one or more identical production lines, is sufficient for creating a physical unclonable function. This PUF function will therefore take advantage of the fact that each oscillator has an intrinsic frequency that is essentially a result of the small variations to which it has been submitted during manufacture.

The method will be now described using the annexed drawings.

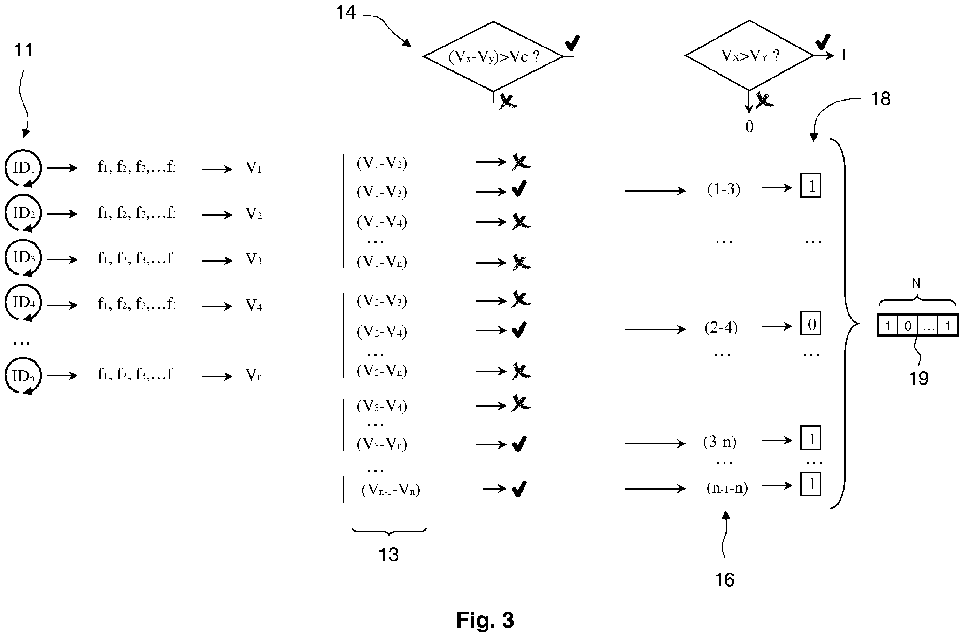

One of the objectives of this method is to generate a value 19, inherent to the electronic circuit 10, via measures of a physical quantity, in this case a frequency, for example. As schematically shown in figures 1 and 3, these measures are performed on components 11 of this circuit 10. More specifically, a series of measures f₁, f₂, ... fᵢ, will be carried out, for example on all components 11 provided for this purpose in the electronic circuit 10.

On the basis of each series of measures, we will be able to calculate, for each component 11 used, at least one statistical value derived from the measures made on this component. For example, and as shown in figure 2, we will determine the average value *V̅* of each series of measures f₁, f₂, ... fᵢ. Furthermore, the uncertainty range *p* could also be determined around each average value. This uncertainty range corresponds to an estimate of the average value error and can be determined by statistical formulas, such as those used for calculating the standard deviation or the uncertainty on the average. The higher the number of measures carried out, the better will be the estimate of the average because the error will be reduced. However, a compromise will have to be found, because the higher the number of measures carried out, the longer the time until statistical values derived from these measures will be. As shown in Figure 2, it can be noted that the uncertainty range *p* can be expressed in different ways. It can be for example determined by two extreme values *a*, *b,* for example by two frequencies on a scale of frequency f. In another example, this range *p* could be defined by the estimate of the error e around the average value (e.g. *V̅*₁±*e*₁)*.*

At least one value V (for example the average value *V̅* and/or the uncertainty range *p*) derived from the measures f₁, f₂, ... fᵢ will be associated to the component from which these measures come. This association can be obtained for example by means of a record or a table associating this/these value(s) V to an identifier of the component 11 in question. Such an association is shown in figure 1 by the values V₁, V₂, ... Vₙ that refer respectively to the components identified by the identifiers ID₁, ID₂, ... IDₙ. A calculation unit 15, such as a microprocessor or a set of electronic components, could execute this task, for example, after having done the calculations of these values V₁, V₂, ... Vₙ.

Following this first step shown on the left side of figure 3, there is a second main step aimed at forming a collection 13 (that is to say a set) of invariable pairs of components 11, preferably from all the components from which the statistical values have been previously determined. This collection 13 is shown on the central left side of figure 3, where the invariable pairs of components are indicated by pairs of letters in brackets (Vₓ -V_{y}). Thus, the first of these pairs could be determined by the couple (V₁ - V₂), the second by the couple (V₁ - V₃) and so on until all possible combinations or a certain number of these combinations have been determined. In this example, the indications of the values V refer to the identifiers ID of the components from which the values V are derived. Also, by this example it can be understood that the components of each pair can be identified via these values. The order that leads to the formation of these pairs could be defined in a routine, for example by means of programming steps executed, for example, by the calculation unit 15. What is important is that this order, once defined, has to be immutable in order to get invariable pairs of components and thus contribute to the reproducibility of the PUF value 19.

As an alternative, the invariable pairs of collection 13 could be generated by means of a table or a pre-established list defining predefined pairs of components. Such a list or table could involve referenced locations (for example location No. 3 assigned to component ID3) in which the values V associated to the corresponding components can be successively stored temporarily. For example, these values could be stored once they have been determined and until they have been used in the following step for selecting pairs of components 11 among those from the collection 13.

Instead of considering all the components 11 available on the electronic circuit 10, it could be also possible to consider only a subset of these components, provided that this subset is perfectly defined and invariable.

There is then a third main step to select, in this collection 13, pairs 16 so that the values V associated to the components of each of these pairs meet at least one selection criterion 14. As shown in the right central part of figure 3, the selection criterion 14 applied in this step can for example define that these values V must be spaced, from each other, by at least one setpoint value Vc. For example, if we consider that values V associated to the components 11 of each pair are the uncertainty ranges *p* previously calculated, this selection could then consist in choosing a pair whose uncertainty ranges do not overlap. This case is shown as an example in figure 2 by the deviation 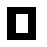 between ranges *p₁* and *p₂* resulting from the pair of component (1-2), which refers to identifiers ID₁, ID₂. In this case, the setpoint value Vc that quantifies the minimal distance between ranges would be a null value. It could be greater than zero if we want to increase the security degree and ensure that even the closest extreme values (b₁ and a₂ in Figure 2) of two ranges cannot be confused.

The setpoint value Vc can be considered as a value to reach or a threshold (minimal value) to reach. It can be a predetermined value or depend on the measures made. In all cases, this value will be a constant in that it will be invariable. This will contribute to the reproducible character of the PUF value 19, which has to be always identical each time at the end of the process that generates it in the same electronic circuit 10 in order to guarantee a perfect reliability.

As an alternative and knowing that the average values (e.g. *V̅*₁, *V̅*₂) associated to the components of a pair have uncertainty ranges (*p₁*, *p₂*) that do not overlap if these average values are sufficiently spaced from each other, it would be also possible to consider these average values instead of their uncertainty range. In this case, the setpoint value Vc that quantifies the minimal deviation between the average values (*V̅*₁, *V̅*₂) would be a value at least equal to the average of the two ranges considered (*p₁, p₂*), preferably at least equal to the average of the two largest ranges among all the uncertainty ranges determined, or even equal to the extent *p* of the largest uncertainty range determined.

As shown in figure 3, carrying out this selection operation allows to obtain pairs called selected pairs 16. As they are selected, the selected pairs 16 can be stored temporarily, for example in a list or a table, until they have been used for generating the PUF value 19. In order to do this, they can be for example successively placed in a list upon selection or be assigned an index, for example a chronological identifier defining an invariable order. They could also be placed in a list or in a table in positions referenced by a (non chronological) index.

As we have seen, establishing the collection 13 of invariable pairs can result from a particular processing order. This processing order will also be invariable. For example, such an order could aim at considering successively the first component 11 and all the other components, then at successively repeating this process with the second component, the third component, the fourth component and so on at least until the n components are processed. During the selection step, i.e. the third main step described above, it will be noted that testing the pairs in such a processing order to know if they meet the selection criterion 14 and, if appropriate, successively placing the selected pairs 16 in a list once it is established that they meet this selection criterion 14, allows to obtain automatically a sequencing of the selected pairs 16. Moreover, this sequencing is immutable since it depends on the invariable processing order according to which the pairs have been tested to be selected.

Thus, the pairs 16 that have been selected can be ordered either indirectly through the imposed processing order that, successively, was followed to form them, or directly by means of an index or any referencing means.

It will be also noted that, during this selection step, it is not necessary to examine all the pairs of the collection 13, although it could be part of a preferred embodiment. We could indeed examine the different pairs of this collection until reaching a certain number of selected pairs 16. However, in this case, the pairs of the collection 13 will have to be examined in an invariable order, such as the aforementioned invariable processing order, while the invariable character of such an order is not required if, during this selection step, all the pairs of the collection 13 or all the pairs of an invariable subset of this collection are examined. Again, what matters is that we can identify or order (directly or indirectly) each selected pair 16 so that the results from comparisons regarding values or data relative to these pairs may be processed in an invariable order during the next step. All embodiments allowing to accomplish this selection step can be advantageously implemented by the calculation unit 15 or by any other electronic unit (processor, chipset, etc.), for example by reading and by carrying out a routine that can be typically preprogramed in this unit. The execution of this routine can of course make use of other storage devices such as for example temporary memories or calculation records.

Once the selection step has been accomplished, it will be possible to generate the value 19 inherent to the electronic circuit in a fourth main step, from results of comparisons of the values V associated to the components 11 of each selected pair 16. As it will be described more in detail later, these comparisons could also relate to data at least one of these data being derived from these values V.

With reference to the right part of figure 3, this comparison step is symbolized by the expression test "Vₓ>V_{y}?". The values or data of each selected pair 16 are indicated by the pairs of digits put in brackets, where each digit symbolically refers to a component (for example, to its identifier) and contains a value associated to this component or a datum derived from such a value. Thus, in the example of figure 3, the first selected pair 16 is the couple (1-3), the second is the couple (2-4), the third is the couple (3-n) and so on. The values or data of these pairs are to be compared by a comparator 17, or by a plurality of comparators 17 as schematized in figure 1. Each comparator 17 is aimed at determining which one of the two values V or data of the couple it receives is for example the greatest or the smallest (without excluding other relational operators such as "grater or equal" or "smaller or equal"). In response, the comparator 17 will produce an elementary binary value 18 at its output, namely a bit 1 if, in case of the pair (X-Y), the value Vₓ is for example greater than the value V_{y} and a bit 0 in the opposite case. It will be noted that data or values Vₓ, V_{y} of a pair will be processed in a constant (i.e. invariable) order and preferably predefined during these comparisons. This follows from the fact that if the operator used in this comparison is for example "greater than", the result of the expression Vₓ > V_{y} differs of course from the result coming from the opposite expression V_{y} > Vₓ.

The following hypothetical case could be considered as for the values or data that can be compared.

In a first case, the compared values could be uncertainty ranges, in particular if, as shown in figure 2, each range *p₁, p₂* is defined by two extreme values *a₁*, *b₁,* respectively *a₂*, *b₂.* In order to verify that the two ranges of the same pair do not overlap, it is easily possible for example to control that each of the two extreme values *a₁, b₁* of a first range *p₁* is greater or lower than the two other extreme values *a₂, b₂* of the second range *p₂*.

In a second case, this comparison may be, as already mentioned, about the comparison of the average values associated to the components of the pair, as it has already been determined (during the third main step aimed at selecting the pairs 16) that the uncertainty ranges around these average values do not overlap or could not overlap.

In a third case, this comparison could be, at the same time, about the uncertainty ranges and the average values at the centre of these ranges. This actually depends on how the ranges in question are expressed. In this hypothetical case, the ranges would be expressed by the estimate of the error *e* around the average value *V̅* (figure 2).

In a fourth case, this comparison could be about data, at least one of which would be derived from the values V associated to the components of the pair. For example, we could consider the gap between the ranges, that is to say the distance 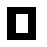 that separates the two ranges (e.g. *p₁, p₂*) of the pair in question (see Figure 2). This gap 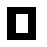 , or inter-range distance, corresponds to a datum derived from the values (the uncertainty ranges) associated to the components of the pair. This gap could then be compared to another datum such as a reference value that would be a second setpoint value, for example a value defining a minimal gap ( 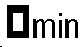 ). As an alternative of this second setpoint value, we could also consider a setpoint range. For example, we could verify if the gap between the average values *V̅x̅* and *V̅y̅* of a pair is between two values that determine a setpoint range, such as a minimal range to reach.

Regardless of the hypothetical case chosen, the result of each comparison always leads to a binary response as shown by the elementary binary values 18 of figures 1 and 3. It is on the basis of the results of these comparisons, namely on the basis of these elementary binary values 18, that the PUF value 19 will be determined in the last step. In order to contribute to the reproducibility of this PUF value, it is important that these results be also processed in an invariable order. This invariable order can be obtained, for example, by respecting a chronological order or by spotting each one of the results. This spotting can be obtained, for example, by means of locations or positions occupied by these results in a chronological list, it can be obtained by means of indexes identifying these positions (in particular if this list is not chronological), or finally it can be obtained via couples of coordinates spotting the results in a two-dimension table (or grid). According to this invariable order, the elementary binary values 18 (results of the comparisons) will be successively placed after each other so as to form the PUF value 19, such as illustrated in Figures 1 and 3. This fourth main step aimed at generating the PUF value 19 can be carried out for example by the calculation unit 15 or by any other electronic unit (processor, chipset, memories, calculation registers, etc.), as previously described with reference to the preceding steps.

Different embodiments of the main steps previously described can be considered, as sometimes already mentioned.

According to a preferred embodiment and with reference to the illustration given in Figure 2, the process to calculate at least one value (statistical value V) derived from the series of measures (f₁, f₂, ... fᵢ) carried out on each component in question will include the following steps:
- determining an average value *V̅* from this series of measures,
- calculating an uncertainty range *p* for each average value *V̅,*
- defining the value V derived from the series of measures as being the uncertainty range *p* thus calculated or the average value *V̅* thus determined.

It should be noted that in case the value V is defined as the average value *V̅* thus determined, the aforementioned step for calculating the uncertainty range *p* for each average value *V̅* becomes an optional step.

In particular, the selection of pairs among those of the collection 13 will be carried out, pair by pair, by comparing the uncertainty ranges *p* associated to the components of the pair, then by selecting the pairs whose components have uncertainty ranges *p* that do not overlap. In other words and with reference to figure 2, the latter step determines the gap 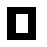 between the uncertainty ranges *p₁, p₂* of the pair and verifies that this gap 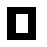 is either higher than or equal to zero, given that the overlapping of two ranges results in a gap 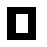 lower than zero.

According to one embodiment, the uncertainty range *p* of each average value *V̅* is calculated on the basis of a confidence interval that is given as a calculation constant. This confidence interval can be of approximately 68% or 95% for example. In statistics, such an interval allows to quantify the degree of accuracy of the average value *V̅*.

As illustrated in Figures 1 and 3, the PUF value 19 is made of an ordered sequence of elementary binary values 18. As already mentioned, these values correspond to the results of value (or data) comparisons associated to the components of the selected pairs 16. These results are processed in an invariable order to obtain the sequencing of the series of bits of the PUF value. In order to obtain a strong PUF value (that is, a secure value), it is important that the number of bits it contains be sufficiently high so that this value may not be guessed, for example by testing all the possible combinations of a finite number of 1 and of 0.

However, a PUF value provided with a very large number of bits is uncomfortable to manipulate, in particular in subsequent applications intended for it. For this reason, an embodiment is suggested in which the PUF value is the result of a hash function applied to an intermediate value; this intermediate value being determined by the ordered processing of the aforementioned results. In other words, instead of obtaining the PUF value directly after sequencing the results (elementary binary values 18) as shown in figures 1 and 3, this sequencing leads to obtain an intermediate value. An (invariable) hash function is then applied to this intermediate value to obtain the PUF value 19 that, advantageously, will be shorter in length than the intermediate value. The length of this PUF value 19 can be defined for example by the hash function.

The object of the present description also relates to an electronic circuit 10 (figure 1) configured to generate a value 19 (PUF value) inherent to this circuit. The latter includes a plurality of components 11 on each of which, or on a part of which, at least one physical quantity can be measured. This physical quantity is measured by at least one measuring element 12. If the number of measuring elements 12 is equal to the number of components 11, each component will have its measuring element 12. If the number of measuring elements 12 is lower than the number of components 11, the measuring elements 12 will be shared by several components 11. In all cases, from each component 11 a series of measures (f₁, f₂, ... fᵢ) from the physical quantity in question will be obtained. This quantity will depend mainly on the type of component 11. Preferably these components will be oscillators, in particular ring oscillators. This electronic circuit 10 further includes at least one comparator 17 adapted to compare two values and, preferably, an interface 20 allowing to exchange information with an external environment to the electronic circuit 10.

This electronic circuit 10 includes a calculation unit 15 configured to perform the steps of the above-described method, in particular the steps of any embodiment of this method.

In its basic version, this calculation unit 15 will be then configured for:
- calculating and associating to each component 11 at least one value V derived from a series of measures f₁, f₂, ... fᵢ performed on this component 11,
- forming a collection 13 of invariable pairs of components 11,
- selecting, in this collection 13, pairs 16 so that the values V associated to the components 11 of each of these pairs 16 be spaced by at least a setpoint value Vc,
- generating the value 19 (PUF value) inherent to the electronic circuit 10 on the basis of the results of the comparisons of the values V associated to the components 11 of each pair and/or of results of comparisons of data, one of which at least is derived from these values V; these results being processed in an invariable order just like said values V or data relative to these pairs during said comparisons.

Preferably, the calculation of the value V derived from the series of measures will aim, for example, at:
- determining a statistical value from said series of measures,
- defining said value deriving from the series of measures as being said statistical value or an uncertainty range calculated from this statistical value;
said statistical value possibly being an average value, such as the average value of the measures of the series.

As already mentioned in the description of the method, the temporary storage of the measures f₁, f₂, ... fᵢ and other calculated data can be made by means of one or several memories, for example of a volatile type, possibly being typically integrated in the calculation unit 15 or connected to it. This calculation unit can be configured to erase these memories, preferably as soon as the storage of the collected or calculated data is made obsolete. For example, the erasure of these data could be programmed and executed as soon as these data have been used and it is therefore no longer necessary to have them stored.

As also mentioned during the description of the method, the formation of the collection 13 of invariable pairs could result from a preprogrammed routine, for example in the central unit 15.

The implementation of the method, according to any of the embodiments described above, can be carried out by means of an algorithm implemented for example in the calculation unit 15. This implementation can be carried out typically during the manufacturing of the electronic circuit 10.

The set of algorithms and/or routines necessary for the implementation of at least one of any of the steps of the method, according to any of the embodiments described above, is schematized in figure 1 by the reference number 15' in the calculation unit 15.

As shown in Figure 1, comparators 17 can be located outside the calculation unit 15 or can be part of it, as represented by the broken line schematizing the extension of this calculation unit.

Once the algorithm or set of algorithms 15' implemented in the electronic circuit 10, preferably with all the constants (that is to say invariable data) that are necessary, this circuit has the advantage that it is autonomous and does not have to use any initialization or personalization step to be exploitable. This circuit 10 appears therefore as completely closed, without any possibility to access any information that may provide a piece of information on the PUF value 19 that it generates. It is then able to generate this PUF value 19 in total autonomy. Still advantageously, this electronic circuit 10 is configured so that the PUF value 19, or any information that could give any piece of information on this value, is never transmitted outside this circuit (for example via the interface 20) and, preferably, it is never stored permanently therein. This means that the resources (memories, registers, tables or another means) configured to temporarily store calculated data and measured values are, preferably, voided of their content at the very latest as soon as said PUF value 19 inherent to the electronic circuit 10 has been used for the first time. Thus, erasing temporarily the stored data and values in these storing means forces the electronic circuit 10 to recalculate the PUF value after each use of this value by an application implemented in this circuit.

In other words, the electronic circuit 10 is able by itself to generate a PUF value 19 that no other device or circuit or nobody can know. Only the circuit 10 generating this PUF value is capable of knowing it.

Still advantageously, since this electronic circuit 10 does not have, preferably, any memory or means allowing to store this PUF value permanently, it is thus forced to recalculate it each time that this value has to be used by one of its applications. Although this requires more time and calculation resources, this constraint is a guarantee of security. Indeed, apart from the moment this PUF value is calculated, the electronic circuit 10 appears advantageously as inert and useless to anyone trying to hack it to obtain this secret value.

As the PUF value cannot be exported outside the electronic circuit 10, preferably the latter will also include an application unit 25 that can house at least one application aimed at using the PUF value 19 for a particular purpose. It will be understood that the word application means in this case a program (or a set of software) directly used by the electronic circuit 10 (in particular by the application unit 25) to perform a task or a set of tasks involving the PUF value 19.

The application unit 25 could consist of a cryptographic unit able to generate an encryption public key from the PUF value used as private key in an asymmetrical cryptography system. Advantageously, such a circuit 10 provided with such an application allows to perfectly guarantee the secrecy of the private key, since it is confined in the electronic circuit 10 and it could only be generated by the latter, without any external intervention. On the other hand, the public key could be transmitted via the interface 20. Such a cryptographic unit would also be used for decrypting messages, which messages would have been coded by the public key. These messages being possibly received for example via the interface 20. Other applications requiring the generation and the use of secret values could be of course implemented in the application unit 25 during the manufacturing of the electronic circuit 10.

Preferably, the electronic circuit 10 may be constructed in monolithic form, so that it is impossible to separate its components without destroying the circuit.

The present description also relates to a method for using the value 19 inherent to the electronic circuit 10. This method of use has the particular feature of requiring each time to generate this PUF value 19 for it to be used. Thus, this method forces to generate the PUF value 19, by the previously described method for this purpose and in particular by any embodiments of this method, in order to use this value 19 inherent to the electronic circuit 10.

In a more specific embodiment, it will be noted that the value 19 is exclusively used by the electronic circuit 10 that generates it. More particularly, this value will be used for example by an application implemented in the application unit 25 of this electronic circuit 10. Furthermore, the value 19 inherent to this electronic circuit 10 is preferably generated when an application implemented in this electronic circuit 10 requires the use of this value 19. In other words, it means that this PUF value is not generated and then stored in advance, without real need to use this value.

Although an overview of the inventive subject matter has been described with reference to specific example embodiments, various modifications and changes may be made to these embodiments without departing from the broader scope of embodiments of the present invention. For example, various embodiments or features thereof may be mixed and matched or made optional by a person of ordinary skill in the art. Such embodiments of the inventive subject matter may be referred to herein, individually or collectively, by the term "invention" merely for convenience and without intending to voluntarily limit the scope of this application to any single invention or inventive concept if more than one is, in fact, disclosed.

The embodiments illustrated herein are believed to be described in sufficient detail to enable those skilled in the art to practice the teachings disclosed. Other embodiments may be used and derived therefrom, such that structural and logical substitutions and changes may be made without departing from the scope of this disclosure. The Detailed Description, therefore, is not to be taken in a limiting sense, and the scope of various embodiments is defined only by the appended claims.

## Claims

1. Method for generating a value (19) inherent to an electronic circuit (10) by means of measures of a physical quantity carried out on components (11) of this electronic circuit (10), **characterized in that** it includes:
- calculating and associating to each component (11) at least one value (V) derived from a series of measures (f₁, f₂, ... fᵢ) carried out on said component (11), the calculation of said value (V) comprising:
- determining a statistical value from said series of measures (f₁, f₂, ... fᵢ),
- defining said value (V) derived from the series of measures as being said statistical value or an uncertainty range calculated from this statistical value,
- forming a collection (13) of invariable pairs of components (11),
- selecting, in said collection (13), pairs (16) so that said values (V) associated to the components (11) of each one of these pairs (16) are spaced from each other by at least a setpoint value (Vc),
- generating said value (19) inherent to the electronic circuit (10) by concatenating the results of comparisons based on at least one of the following enumerations:
- the values (V) associated to the components (11) of each selected pair (16),
- data among which at least one is derived from these values (V),
said results being processed in an invariable order like said values (V) or data relative to these pairs (16) during said comparisons.

2. Method according to claim 1, **characterized in that** said statistical value is an average value.

3. Method according to claim 1 or 2, **characterized in that** the selection of the pairs (16) among those of said collection (13) is carried out, pair after pair, by comparing the uncertainty ranges associated to the components of the pair, then by selecting the pairs (16) whose components have uncertainty ranges that do not overlap.

4. Method according to one of the preceding claims, **characterized in that** said setpoint value (Vc) depends on the performed measures.

5. Method according to one of claims 2 to 4, **characterized in that** said uncertainty range is determined by two extreme values delimiting said uncertainty range or by estimating an error around said average value.

6. Method according to one of the preceding claims, **characterized in that** said data compared to generate the value (19) inherent to the electronic circuit (10) are at least a reference value and a value quantifying an interval between the ranges associated to the components of said selected pair (16).

7. Method according to one of the preceding claims, **characterized in that** said uncertainty range is calculated on the basis of a given confidence interval.

8. Method according to one of the preceding claims, **characterized in that** said value (19) inherent to the electronic circuit (10) is derived from a hash function applied to an intermediate value determined by the ordered processing of said results.

9. Electronic circuit (10) configured to generate a value (19) inherent to this circuit, comprising:
- a calculation unit (15) configured to carry out the method of any of claims 1 to 8,
- the components (11) on each of which at least one physical quantity can be measured,
- at least one measuring element (12) allowing to perform measures (f₁, f₂, ... fᵢ) of this physical quantity,
- at least one comparator (17) adapted to compare two values for carrying out said comparisons, and
- an interface (20) allowing to exchange information with an environment external to said electronic circuit (10), and
- an application unit (25) being able to house at least one application intended to use said value (19) inherent to the electronic circuit (10).

10. Electronic circuit (10) according to claim 9, **characterized in that** it is also configured to prevent any transmission, through said interface (20), of said value (19) inherent to this electronic circuit (10).

11. Electronic circuit (10) according to claim 9 or 10, **characterized in that** it includes means configured to temporarily memorize calculated data and measured values, and **in that** it is configured to erase these data and these values from said storing means at the very latest as soon as said value (19) inherent to the electronic circuit (10) has been used for the first time.

12. Electronic circuit (10) according to one of claims 9 to 11, **characterized in that** said application unit (25) is a cryptographic unit configured to generate a public key from said value (19) inherent to the electronic circuit (10), this value (19) being used as private key associated to said public key in an asymmetrical cryptography system, this cryptographic unit being further configured for decrypting coded messages by means of said public key.

13. Method for using a value (19) inherent to an electronic circuit (10), **characterized in that** this value (19) is each time generated, by the method according to one of claims 1 to 8, in order to be used.

14. Method according to claim 13, **characterized in that** said value (19) is exclusively used by said electronic circuit (10).

15. Method according to claim 13 or 14 **characterized in that** said value (19) is generated when an application implemented in this electronic circuit (10) requires the use of this value (19).

## Patentansprüche

1. Verfahren zum Erzeugen eines Wertes (19), der einer elektronischen Schaltung (10) inhärent ist, mittels Messungen einer physikalischen Größe, die an Komponenten (11) dieser elektronischen Schaltung (10) ausgeführt werden, **dadurch gekennzeichnet, dass** es Folgendes beinhaltet:
- Berechnen wenigstens eines Wertes (V) und Zuordnen dieses zu jeder Komponente (11), der aus einer Reihe von Messungen (f₁, f₂, ... fᵢ) abgeleitet ist, die an der Komponente (11) ausgeführt werden, wobei die Berechnung des Wertes (V) Folgendes umfasst:
- Bestimmen eines statistischen Wertes aus dieser Reihe von Messungen (f₁, f₂, ... fᵢ),
- Definieren des Wertes (V), der aus der Reihe von Messungen abgeleitet ist, als den statistischen Wert oder einen aus diesem statistischen Wert berechneten Unsicherheitsbereich,
- Ausbilden einer Sammlung (13) unveränderlicher Komponentenpaare (11),
- Auswählen, in der Sammlung (13), von Paaren (16), so dass die den Komponenten (11) jedes dieser Paare (16) zugeordneten Werte (V) um wenigstens einen Sollwert (Vc) voneinander beabstandet sind,
- Erzeugen des Wertes (19), der der elektronischen Schaltung (10) inhärent ist, durch Verketten der Ergebnisse von Vergleichen, basierend auf wenigstens einer der folgenden Aufzählungen:
- die Werte (V), die den Komponenten (11) jedes ausgewählten Paares (16) zugeordnet sind,
- Daten, aus denen wenigstens eines aus diesen Werten (V) abgeleitet ist,
wobei die Ergebnisse in einer unveränderlichen Reihenfolge, so wie die Werte (V) oder Daten relativ zu diesen Paaren (16) während der Vergleiche, verarbeitet werden.

2. Verfahren nach Anspruch 1, **dadurch gekennzeichnet, dass** der statistische Wert ein Durchschnittswert ist.

3. Verfahren nach Anspruch 1 oder 2, **dadurch gekennzeichnet, dass** die Auswahl der Paare (16) unter jenen der Sammlung (13) paarweise durch Vergleichen der den Komponenten des Paares zugeordneten Unsicherheitsbereiche und dann durch Auswählen der Paare (16), deren Komponenten Unsicherheitsbereiche aufweisen, die sich nicht überlappen, ausgeführt wird.

4. Verfahren nach einem der vorhergehenden Ansprüche, **dadurch gekennzeichnet, dass** der Sollwert (Vc) von den durchgeführten Messungen abhängt.

5. Verfahren nach einem der Ansprüche 2 bis 4, **dadurch gekennzeichnet, dass** der Unsicherheitsbereich durch zwei Extremwerte, die den Unsicherheitsbereich begrenzen, oder durch Abschätzen eines Fehlers um den Mittelwert herum bestimmt wird.

6. Verfahren nach einem der vorhergehenden Ansprüche, **dadurch gekennzeichnet, dass** die Daten, die verglichen werden, um den Wert (19), der der elektronischen Schaltung (10) inhärenten ist, zu erzeugen, wenigstens ein Referenzwert und ein Wert sind, der ein Intervall zwischen den Bereichen quantifiziert, die den Komponenten des ausgewählten Paares (16) zugeordnet sind.

7. Verfahren nach einem der vorhergehenden Ansprüche, **dadurch gekennzeichnet, dass** der Unsicherheitsbereich auf der Basis eines gegebenen Konfidenzintervalls berechnet wird.

8. Verfahren nach einem der vorhergehenden Ansprüche, **dadurch gekennzeichnet, dass** der Wert (19), der der elektronischen Schaltung (10) inhärent ist, aus einer Hash-Funktion abgeleitet wird, die auf einen Zwischenwert angewendet wird, der durch die geordnete Verarbeitung der Ergebnisse bestimmt wird.

9. Elektronische Schaltung (10), die konfiguriert ist, um einen Wert (19), der dieser Schaltung inhärent ist, zu erzeugen, Folgendes umfassend:
- eine Berechnungseinheit (15), die konfiguriert ist, um das Verfahren nach einem der Ansprüche 1 bis 8 auszuführen,
- die Komponenten (11), an jeder von welchen sich wenigstens eine physikalische Größe messen lässt,
- wenigstens ein Messelement (12), das es ermöglicht, Messungen (f₁, f₂, ... fᵢ) dieser physikalischen Größe durchzuführen,
- wenigstens einen Komparator (17), der geeignet ist, um zwei Werte zu vergleichen, um diese Vergleiche auszuführen, und
- eine Schnittstelle (20), die einen Informationsaustausch mit einer Umgebung außerhalb der elektronischen Schaltung (10) ermöglicht, und
- eine Anwendungseinheit (25), die in der Lage ist, wenigstens eine Anwendung aufzunehmen, die dazu bestimmt ist, den Wert (19), der der elektronischen Schaltung (10) inhärent ist, zu verwenden.

10. Elektronische Schaltung (10) nach Anspruch 9, **dadurch gekennzeichnet, dass** sie ebenso konfiguriert ist, um jede Übertragung des Wertes (19), der dieser elektronischen Schaltung (10) inhärent ist, über die Schnittstelle (20) zu verhindern.

11. Elektronische Schaltung (10) nach Anspruch 9 oder 10, **dadurch gekennzeichnet, dass** sie Mittel beinhaltet, die konfiguriert sind, um berechnete Daten und gemessene Werte vorübergehend zu speichern, und dadurch, dass sie konfiguriert ist, um diese Daten und diese Werte aus den Speichermitteln spätestens dann zu löschen, wenn der Wert (19), der der elektronischen Schaltung (10) inhärent ist, zum ersten Mal verwendet wurde.

12. Elektronische Schaltung (10) nach einem der Ansprüche 9 bis 11, **dadurch gekennzeichnet, dass** die Anwendungseinheit (25) eine kryptographische Einheit ist, die konfiguriert ist, um einen öffentlichen Schlüssel aus dem Wert (19), der der elektronischen Schaltung (10) inhärent ist, zu erzeugen, wobei dieser Wert (19) als privater Schlüssel verwendet wird, der dem öffentlichen Schlüssel in einem asymmetrischen Kryptographiesystem zugeordnet ist, wobei diese kryptographische Einheit ferner konfiguriert ist, um codierte Nachrichten mittels des öffentlichen Schlüssels zu entschlüsseln.

13. Verfahren zur Verwendung eines Wertes (19), der einer elektronischen Schaltung (10) inhärent ist, **dadurch gekennzeichnet, dass** dieser Wert (19) jedes Mal nach dem Verfahren nach einem der Ansprüche 1 bis 8 erzeugt wird, um verwendet zu werden.

14. Verfahren nach Anspruch 13, **dadurch gekennzeichnet, dass** der Wert (19) ausschließlich durch die elektronische Schaltung (10) verwendet wird.

15. Verfahren nach Anspruch 13 oder 14, **dadurch gekennzeichnet, dass** der Wert (19) erzeugt wird, wenn eine in dieser elektronischen Schaltung (10) implementierte Anwendung die Verwendung dieses Wertes (19) erfordert.

## Revendications

1. Procédé de génération d'une valeur (19) inhérente à un circuit électronique (10) au moyen de mesures d'une grandeur physique effectuée sur des composants (11) de ce circuit électronique (10), **caractérisé en ce qu'**il comporte :
- le calcul et l'association à chaque composant (11) d'au moins une valeur (V) dérivée d'une série de mesures (f₁, f₂, ... fᵢ) effectuées sur ledit composant (11), le calcul de ladite valeur (V) comprenant :
- la détermination d'une valeur statistique à partir de ladite série de mesures (f₁, f₂, ... fᵢ),
- la définition de ladite valeur (V) dérivée de la série de mesures comme étant ladite valeur statistique ou une plage d'incertitude calculée à partir de cette valeur statistique,
- la formation d'une collection (13) de paires invariables de composants (11),
- la sélection, dans ladite collection (13), de paires (16) de sorte que lesdites valeurs (V) associées aux composants (11) de chacune de ces paires (16) sont espacées les unes des autres d'au moins une valeur de consigne (Vc),
- la génération de ladite valeur (19) inhérente au circuit électronique (10) en concaténant les résultats de comparaisons en fonction d'au moins l'une des énumérations suivantes :
- les valeurs (V) associées aux composants (11) de chaque paire (16) sélectionnée,
- des données dont au moins une est dérivée de ces valeurs (V),
lesdits résultats étant traités dans un ordre invariable comme lesdites valeurs (V) ou données relatives à ces paires (16) lors desdites comparaisons.

2. Procédé selon la revendication 1, **caractérisé en ce que** ladite valeur statistique est une valeur moyenne.

3. Procédé selon la revendication 1 ou 2, **caractérisé en ce que** la sélection des paires (16) parmi celles de ladite collection (13) est effectuée, paire après paire, en comparant les plages d'incertitude associées aux composants de la paire, puis en sélectionnant les paires (16) dont les composants ont des plages d'incertitude qui ne se chevauchent pas.

4. Procédé selon l'une quelconque des revendications précédentes, **caractérisé en ce que** ladite valeur de consigne (Vc) dépend des mesures réalisées.

5. Procédé selon l'une quelconque des revendications 2 à 4, **caractérisé en ce que** ladite plage d'incertitude est déterminée par deux valeurs extrêmes délimitant ladite plage d'incertitude ou par estimation d'une erreur autour de ladite valeur moyenne.

6. Procédé selon l'une quelconque des revendications précédentes, **caractérisé en ce que** lesdites données comparées pour générer la valeur (19) inhérente au circuit électronique (10) sont au moins une valeur de référence et une valeur quantifiant un intervalle entre les plages associées aux composants de ladite paire (16) sélectionnée.

7. Procédé selon l'une quelconque des revendications précédentes, **caractérisé en ce que** ladite plage d'incertitude est calculée sur la base d'un intervalle de confiance donné.

8. Procédé selon l'une quelconque des revendications précédentes, **caractérisé en ce que** ladite valeur (19) inhérente au circuit électronique (10) est dérivée d'une fonction de hachage appliquée à une valeur intermédiaire déterminée par le traitement ordonné desdits résultats.

9. Circuit électronique (10) configuré pour générer une valeur (19) inhérente à ce circuit, comprenant :
- une unité de calcul (15) configurée pour exécuter le procédé selon l'une quelconque des revendications 1 à 8,
- les composants (11) sur chacun desquels au moins une grandeur physique peut être mesurée,
- au moins un élément de mesure (12) permettant de réaliser des mesures (f₁, f₂, ... fᵢ) de cette grandeur physique,
- au moins un comparateur (17) apte à comparer deux valeurs pour effectuer lesdites comparaisons, et
- une interface (20) permettant d'échanger des informations avec un environnement extérieur audit circuit électronique (10), et
- une unité d'application (25) pouvant héberger au moins une application destinée à utiliser ladite valeur (19) inhérente au circuit électronique (10).

10. Circuit électronique (10) selon la revendication 9, **caractérisé en ce qu'**il est également configuré pour empêcher toute transmission, à travers ladite interface (20), de ladite valeur (19) inhérente à ce circuit électronique (10).

11. Circuit électronique (10) selon la revendication 9 ou 10, **caractérisé en ce qu'**il comporte un organe configuré pour mémoriser temporairement les données calculées et valeurs mesurées, et **en ce qu'**il est configuré pour effacer ces données et ces valeurs dudit organe de stockage au plus tard dès que ladite valeur (19) inhérente au circuit électronique (10) a été utilisée pour la première fois.

12. Circuit électronique (10) selon l'une quelconque des revendications 9 à 11, **caractérisé en ce que** ladite unité d'application (25) est une unité cryptographique configurée pour générer une clé publique à partir de ladite valeur (19) inhérente au circuit électronique (10), cette valeur (19) étant utilisée comme clé privée associée à ladite clé publique dans un système de cryptographie asymétrique, cette unité cryptographique étant en outre configurée pour décrypter des messages codés au moyen de ladite clé publique.

13. Procédé d'utilisation d'une valeur (19) inhérente à un circuit électronique (10), **caractérisé en ce que** cette valeur (19) est générée à chaque fois, par le procédé selon l'une quelconque des revendications 1 à 8, en vue de son utilisation.

14. Procédé selon la revendication 13, **caractérisé en ce que** ladite valeur (19) est exclusivement utilisée par ledit circuit électronique (10).

15. Procédé selon la revendication 13 ou 14, **caractérisé en ce que** ladite valeur (19) est générée lorsqu'une application mise en œuvre dans ce circuit électronique (10) nécessite l'utilisation de cette valeur (19).
